# FASCICULE DE BREVET EUROPEEN

(11) **EP 0 383 671 B1**
(45) Date de publication et mention de la délivrance du brevet: **30.06.1993**
(21) Numéro de dépôt: 90400382.9
(22) Date de dépôt: 13.02.1990
(51) Int. Cl.: E05F 15/00

(54) **Système détecteur d'obstacle comprenant un ensemble de connexion perfectionné**
Hindernisdetektor mit einem verbesserten Verbindungszusammenbau
Obstacle detector with improved connection assembly

(30) Priorité: 13.02.1989 FR 8901815
(43) Date de publication de la demande: 22.08.1990
(73) Titulaire: JAEGER, F-92303 Levallois-Perret (FR)
(72) Inventeur: Chardon Jérôme, F-95100 Argenteuil (FR)
(74) Mandataire: Ahner, Francis

(56) Documents cités:
- EP-A- 0 156 698
- FR-A- 2 564 971
- GB-A- 871 484
- US-A- 3 300 600
- US-A- 3 662 491
- US-A- 4 358 646

## Description

La présente invention concerne le domaine des systèmes détecteurs d'obstacle aptes à détecter la présence d'un obstacle intercalé entre un cadre ou châssis et un organe mobile associé.

La présente invention trouve en particulier application dans la détection d'obstacle intercalé sur le trajet de déplacement de vitres de véhicules automobiles entraînées électriquement.

On a déjà proposé de nombreux systèmes détecteurs d'obstacle destinés à répondre à la fonction précitée.

La présente invention concerne plus précisément encore les systèmes détecteurs d'obstacle du type comprenant deux pistes électriquement conductrices maintenues séparées au repos par des moyens souples élastiques. Lorsqu'une pression due à un obstacle intercalé est exercée sur le détecteur d'obstacle, la déformation résultante des pistes porte celles-ci en contact. La commutation ainsi réalisée peut être utilisée par exemple pour générer une alarme ou inverser le sens de déplacement de l'organe mobile. De tels systèmes sont par exemple décrits dans les documents FR-A-2 155 729, FR-A-2 564 971, FR-A-2 089 278, FR-A-2 171 871, EP-A-015 393, EP-A-0 104 414, EP-A-195 908, DE-A-2 142 370, DE-A-2 643 505, DE-A-3 424 581, DE-A-3 304 400, DE-A-2 719 438, US-A-3 812 313, US-A-4 115 952, US-A-3 710 050, US-A-3 113 167, US-A-3 118 984, US-A-3 154 303 et US-A-3 662 491.

Les systèmes détecteurs d'obstacle du type ci-dessus indiqués, jusqu'ici proposés, sont formés généralement soit d'un corps tubulaire en matériau électriquement isolant, qui porte sur sa surface interne les deux pistes électriquement conductrices, soit de deux pistes électriquement conductrices, généralement parallèles, séparées par des entretoises en matériau électriquement isolant.

Dans la pratique, on constate que malgré les nombreux intérêts de ces systèmes détecteurs d'obstacle et malgré les nombreuses recherches conduites en la matière, comme en témoignent les nombreux documents cités ci-dessus, de tels détecteurs ne sont pas développés et utilisés industriellement de nos jours en raison des différents inconvénients précités.

Il existe pourtant une demande importante, en particulier dans le domaine automobile où les vitres à commande électrique tendent à se généraliser.

La présente invention a pour but d'améliorer la situation en proposant un nouveau système détecteur d'obstacle équipé d'un ensemble de connexion qui tout en étant fiable, robuste et économique permet un raccordement rapide sur une longueur quelconque de dispositif détecteur et assure simultanément l'étanchéité du système.

Ce but est atteint selon l'invention grâce à un système détecteur d'un obstacle intercalé entre un cadre et un organe mobile associé du type comprenant un dispositif détecteur d'obstacle comportant au moins deux pistes électriquement conductrices maintenues séparées au repos par des moyens souples élastiques, caractérisé par le fait qu'il comprend un ensemble de connexion qui comporte :
- un noyau support en matériau électriquement isolant,
- au moins deux éléments électriquement conducteurs séparés portés par le noyau support et destinés à venir respectivement en contact avec les pistes lorsque le noyau est enfiché entre celles-ci,
- des moyens d'enveloppe aptes à venir en prise avec la surface externe du dispositif détecteur d'obstacle pour resserrer celui-ci sur le noyau support et les éléments électriquement conducteurs afin de maintenir une liaison électrique entre les pistes et ces éléments et assurer l'étanchéité du dispositif détecteur.

D'autres caractéristiques, buts et avantages de la présente invention apparaitront à la lecture de la description détaillée qui va suivre et en regard des dessins annexés donnés à titre d'exemples non limitatifs et sur lesquels :
- la figure 1 représente une vue schématique en coupe longitudinale d'un ensemble de connexion conforme à la présente invention,
- la figure 2 représente une vue schématique en plan d'un noyau support utilisé dans un ensemble de connexion conforme à la présente invention,
- la figure 3 représente une vue schématique en coupe longitudinale d'un ensemble de connexion conforme à un second mode de réalisation de la présente invention,
- la figure 4 représente une vue schématique en coupe longitudinale d'un ensemble de connexion conforme à un troisième mode de réalisation de la présente invention,
- la figure 5 représente une vue latérale des moyens d'enveloppe utilisés dans le cadre de ce troisième mode de réalisation,
- la figure 6 représente une vue schématique en coupe longitudinale d'un ensemble de connexion conforme à la présente invention destiné au raccordement de deux sections séparées et non alignées d'un dispositif détecteur d'obstacle,
- la figure 7 représente une vue schématique en coupe transversale de l'ensemble de connexion représenté sur la figure 6, et
- la figure 8 représente une variante de réalisation de l'ensemble de connexion destiné à raccorder deux sections séparées et non alignées d'un dispositif détecteur d'obstacle.
- les figures 9, 10, 11 et 12 représentent schématiquement, en coupe longitudinale, trois autres variantes de réalisation d'un ensemble de correction conforme à la présente invention et,
- la figure 13 représente une vue schématique en plan d'un élément électriquement conducteur intégré à l'ensemble de connection de la figure 9.

On aperçoit sur les figures annexées un détecteur d'obstacle comprenant un corps tubulaire 10 en matériau électriquement isolant, qui porte sur sa surface interne deux pistes électriquement conductrices 11, 12.

Le cas échéant, le dispositif détecteur peut être formé simplement de deux pistes électriquement conductrices 11, 12, séparées par une ou deux entretoises en matériau électriquement isolant, souple et élastique.

La structure du dispositif détecteur d'obstacle comprenant les deux pistes électriquement conductrices 11, 12, ne sera pas décrite en détail par la suite. Un tel détecteur peut être conforme par exemple aux dispositions décrites et représentées dans les nombreux documents antérieurs cités dans le préambule de la présente demande de brevet.

On notera cependant que de préférence les pistes électriquement conductrices 11, 12 et le corps tubulaire 10 qui porte celles-ci sur sa surface interne ou le cas échéant les entretoises insérées entre les pistes peuvent être coextrudées et être formées à base du même matériau, moyennant l'apport supplémentaire de charges électriquement conductrices au niveau des pistes 11, 12.

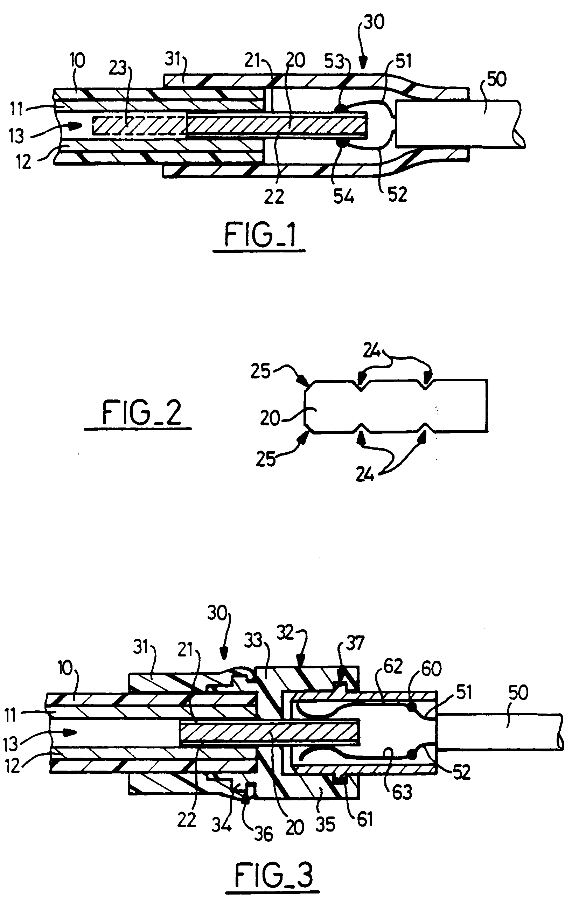

On aperçoit sur la figure 1 un ensemble de connexion qui comporte un noyau support 20, deux éléments électriquement conducteurs 21, 22, et des moyens d'enveloppe 30.

Le noyau support 20 est généralement plan. Il est formé d'un matériau électriquement isolant. Les deux éléments électriquement conducteurs 21, 22, sont séparés et portés par des faces opposées du noyau support 20. La section du noyau support 20 revêtu des éléments électriquement conducteurs 21, 22, est sensiblement complémentaire (tout en étant de préférence légèrement supérieure) à la section libre de la chambre 13 du dispositif détecteur 10, définie entre les pistes 11, 12. Ainsi, on obtient que les éléments électriquement conducteurs 21, 22, viennent respectivement en contact avec les pistes 11, 12, lorsque le noyau 20 est enfiché entre celles-ci.

On aperçoit également sur la figure 1 un câble électrique 50 muni de deux conducteurs 51, 52, dont les extrémités sont soudées respectivement sur les éléments électriquement conducteurs 21, 22, en 53, 54.

Selon le mode de réalisation représenté sur la figure 1 les moyens d'enveloppe 30 comprennent un manchon rétractable 31 de préférence thermorétractable. Celui-ci a ses extrémités engagées respectivement sur le corps 10 du dispositif détecteur d'obstacle et sur le câble 50. Ainsi, après rétraction le manchon thermorétractable 31 enserre à la fois le dispositif détecteur d'obstacle 10 et le câble 50. Le manchon thermorétractable 31 garantit ainsi l'étanchéité du système. On notera de plus que le manchon thermorétractable 31 ressere le corps 10 du dispositif détecteur d'obstacle sur le noyau support 20 et les éléments électriquement conducteurs 21, 22, afin de garantir une liaison électrique fiable entre les pistes 11, 12 et les éléments électriquement conducteurs 21, 22.

Le cas échéant, comme représenté en traits interrompus sur la figure 1, le noyau support 20 peut être prolongé, vers l'intérieur du dispositif détecteur, au-delà des éléments électriquement conducteurs 21, 22, par un insert 23 en matériau électriquement isolant qui évite que l'effet de serrage du manchon rétractable 31 ne porte les pistes 11, 12 en contact.

Comme représenté sur la figure 2, pour renforcer l'ancrage du noyau support 20 dans le dispositif détecteur 10, certaines au moins des faces du noyau support 20, ainsi que de préférence les arêtes correspondantes des éléments électriquement conducteurs 21, 22, sont formées de dentures 24.

Par ailleurs, pour faciliter l'engagement du noyau support 20 dans le dispositif détecteur 10, de préférence l'extrémité avant du noyau support 20 est biseautée comme représenté en 25 sur la figure 2.

Le manchon rétractable 31 peut être induit d'une colle silicone garantissant la tenue et l'étanchéité de l'ensemble. Par ailleurs, le noyau support 20 muni des éléments électriquement conducteurs 21, 22, et prolongé le cas échéant par l'insert 23 peut être formé selon la technique classique des circuits imprimés.

On retrouve sur la figure 3 un dispositif détecteur comprenant un corps 10 et deux pistes électriquement conductrices 11, 12, un noyau support muni de deux éléments électriquement conducteurs 21, 22, et un câble 50 comprenant deux liaisons 51, 52.

Le cas échéant, le noyau support 20 pourrait être pourvu d'un insert 23.

Selon la représentation donnée sur la figure 3, les moyens d'enveloppe 30 comprennent un manchon rétractable de préférence thermorétractable 31 et un boîtier 32.

Le boîtier 32 comprend un flasque 33, un fourreau principal 34 et un fourreau secondaire 35. Le flasque 33 est traversé de façon étanche par le noyau 20 équipé des éléments 21, 22, qu'il supporte. Les fourreaux principal 34 et secondaire 35 sont solidaires du flasque 33, respectivement de part et d'autre de celui-ci. En d'autres termes, le flasque s'étend transversalement à l'axe des fourreaux 34, 35. Ceux-ci sont généralement cylindriques.

Le fourreau principal 34 est conçu pour être engagé sur l'extrémité du dispositif détecteur, comme représenté sur la figure 3. Le fourreau principal 34 est muni de préférence, sur sa surface externe, d'une rainure annulaire 36. Le manchon rétractable 31 est engagé sur le corps du dispositif détecteur et sur le fourreau principal 34. Son extrémité pénètre dans la rainure annulaire 36. Ainsi, après rétraction, le manchon rétractable 31 assure une étanchéité parfaite du système et immobilise le boîtier 32 sur le dispositif détecteur.

L'ensemble de connexion représenté sur la figure 3 comprend également un embout 60. L'embout est formé d'un corps généralement cylindrique adapté pour être engagé élastiquement et maintenu dans le fourreau secondaire 35. A cet effet, selon la représentation donnée sur la figure 3, le fourreau secondaire 32 est muni sur sa surface interne d'une rainure annulaire 37. Par ailleurs, l'embout 69 est muni sur sa surface externe d'une nervure annulaire 61 biseautée vers l'avant et adaptée pour être engagée élastiquement dans la rainure 37. Le diamètre externe du corps de l'embout 30 est sensiblement complémentaire du diamètre interne du fourreau secondaire 35.

Bien entendu d'autres dispositions connues en soi peuvent être utilisées pour maintenir l'embout 60 dans le fourreau secondaire 35.

Le câble 50 est fixé sur l'embout 60 à l'aide de tout moyen connu approprié.

L'embout 60 porte par ailleurs deux lamelles souples 62, 63, adaptées pour venir respectivement en contact avec les éléments électriquement conducteurs 21, 22.

Les liaisons filaires 51, 52, du câble 50 sont soudées respectivement sur les lamelles 62, 63.

Pour assurer la connexion à l'aide de l'ensemble représenté sur la figure 3, il convient dans un premier temps d'engager le noyau 20 équipé des éléments 21, 22, entre les pistes 11, 12, et d'engager le fourreau principal 34 sur le dispositif 10. Le manchon thermorétractable 31 préalablement enfilé sur l'ensemble est alors rétracté. Il suffit ensuite d'engager l'embout 60 équipé des lamelles 62, 63, raccordées au câble 50 dans le fourreau secondaire 35.

L'avantage du mode de réalisation représenté sur la figure 3 est d'autoriser le démontage de la connexion, par séparation de l'embout 60, tout en garantissant l'étanchéité du système.

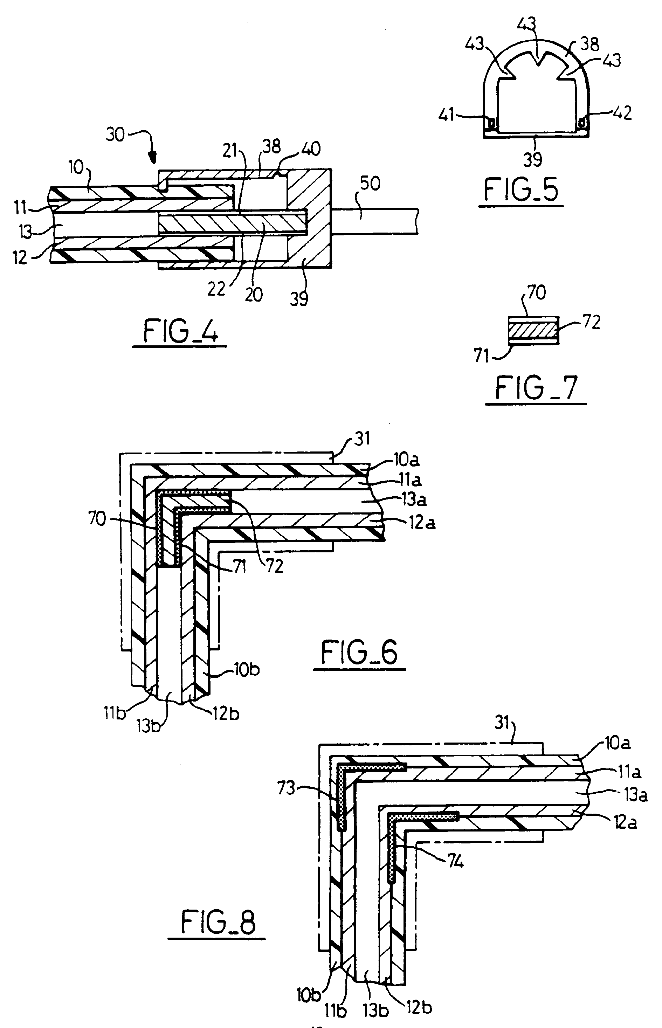

On retrouve sur la figure 4 un dispositif détecteur comprenant un corps 10 portant les pistes électriquement conductrices 11, 12, un noyau support 20 en matériau électriquement isolant qui porte les éléments électriquement conducteurs 21, 22, et un câble bi-filaire 50. Selon le mode de réalisation représenté sur la figure 4, les moyens d'enveloppe 30 comprennent un boîtier formé de deux coquilles 38, 39, d'une pièce. La coquille 38 est articulée sur la coquille 39 autour d'une ligne de faiblesse 40. La coquille 39 porte le noyau support 20. Les coquilles 38, 39, sont en outre pourvues de moyens d'encliquetage classiques 41, 42, aptes à maintenir les coquilles 38, 39 dans une position relative de fermeture, dans laquelle les deux coquilles 38, 39, enferment l'extrémité du dispositif détecteur 10 et le noyau support 20 équipé des éléments conducteurs 21, 22, comme représenté sur la figure 4. Plus précisément, de préférence, en position de fermeture, les extrémités libres des coquilles 38, 39, formant mâchoire, enserrent le dispositif détecteur 10 sur le noyau 20, afin d'une part, de serrer les pistes 11, 12, respectivement sur les éléments conducteurs 21, 22, et d'autre part de parfaire l'étanchéité du système.

A cet effet, on notera que comme représenté sur la figure 5, l'une au moins des coquilles 38, 39, peut être munie de dentures 43, aptes à venir en prise avec la surface externe du dispositif détecteur 10.

Pour simplifier l'illustration, sur la figure 4, on n'a pas représenté la liaison électrique entre le câble 50 et les éléments électriquement conducteurs 21, 22, cette connexion peut être réalisée à l'aide de tout moyen classique approprié.

On a représenté sur les figures 6 et suivantes, un ensemble de connexion destiné à raccorder deux sections séparées et non alignées d'un dispositif détecteur d'obstacle. Ces deux sections sont assorties respectivement d'indice a et b.

Pour l'essentiel, l'ensemble de connexion représenté sur les figures 6 et suivantes comprend deux éléments électriquement conducteurs non plans et destinés à venir respectivement en contact avec les pistes électriquement conductrices 11a, 11b et 12a, 12b.

Plus précisément encore, les deux éléments électriquement conducteurs non plans sont selon la représentation des figures 6 et suivantes en forme de "V". L'ouverture du "V" correspond à l'inclinaison recherchée entre les deux sections du dispositif détecteur.

Le cas échéant, on peut utiliser des éléments électriquement conducteurs en forme d'arc, correspondant à la forme recherchée pour les sections de dispositif détecteur à raccorder.

Plus précisément encore, selon la représentation des figures 6 et 7, l'ensemble de connexion comprend deux éléments électriquement conducteurs 70, 71, portés par un noyau support 12 généralement incurvé et adapté à l'inclinaison relative recherchée entre les deux sections de dispositif détecteur à raccorder.

La fixation des éléments électriquement conducteurs 70, 71, sur le noyau 72, ou la métallisation de celui-ci peuvent être réalisées à l'aide de toute technique connue de l'homme de l'art.

Bien entendu la section du noyau 72 équipé des éléments électriquement conducteurs 72, 71 doit être complémentaire de la chambre 13 définie entre les pistes 11 et 12.

Selon le mode de réalisation représenté sur la figure 8, les deux éléments électriquement conducteurs non plans, référencés 73 et 74, sont adaptés pour être engagés respectivement entre l'une des pistes électriquement conductrices 11a, 11b, 12a, 12b, et le corps tubulaire 10 du dispositif détecteur.

Le cas échéant, comme représenté schématiquement en traits interrompus sur les figures 6 et 8, les deux sections du dispositif détecteur d'obstacle à raccorder, assorties respectivement des indices a et b peuvent être revêtues d'un manchon rétractable 31 renforçant l'étanchéité du système.

En variante, le noyau support 72 représenté sur la figure 6, peut être prolongé au-delà des éléments conducteurs 70, 71, par des inserts en matériau électriquement isolants évitant une mise en contact intempestive des pistes 11a, 12a ou 11b, 12b sous l'effet de la sollicitation du manchon thermorétractable 31.

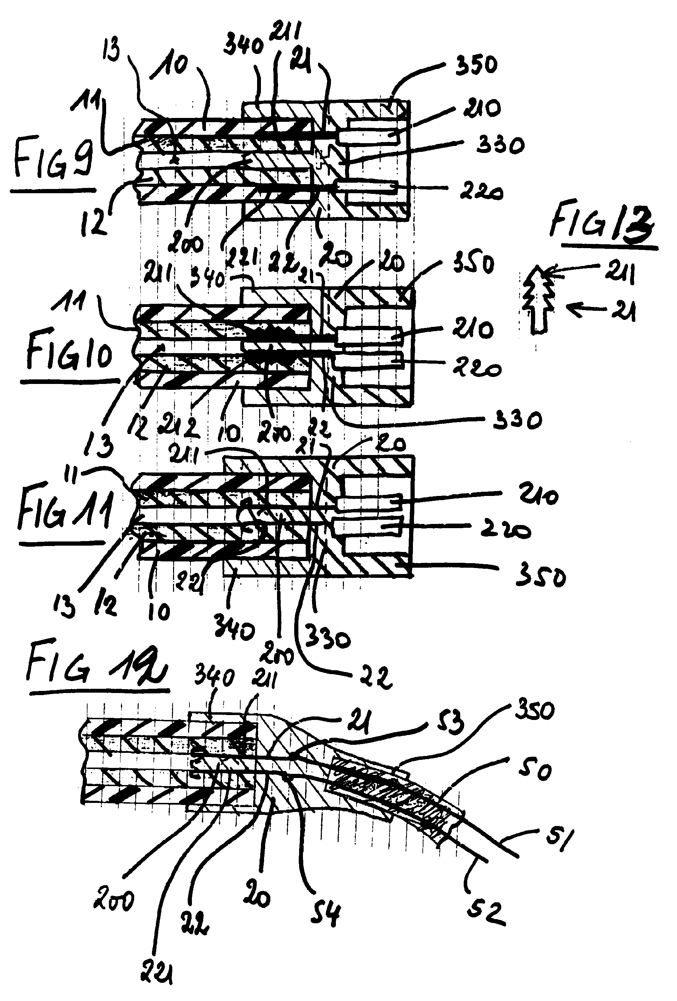

On retrouve sur les figures 9 à 12 un corps 10 portant les pistes électriquement conductrices 11, 12 et un noyau support 20 en matière électriquement isolant qui comporte les éléments électriquement conducteurs 21, 22.

Plus précisément, selon les figures 9 à 11, le noyau support 20 réalisé en matériau électriquement isolant comprend un flasque 330 prolongé sur ses faces opposées respectivement par un fourreau principal 340 et un fourreau secondaire 350.

Les éléments électriquement conducteurs 21, 22 traversent le flasque 20. Les extrémités des éléments 21, 22 accessibles au niveau du fourreau principal 340 sont conçues pour venir en contact avec les pistes 11, 12 respectivement. De préférence, le flasque 330 porte en outre du côté du fourreau principal 340 un doigt central 200 complémentaire de la section libre de la chambre 13 du dispositif détecteur.

Les extrémités 210, 220 des éléments 21, 22 accessibles au niveau du fourreau secondaire 350 sont conçues pour former un élément de connecteur classique. Plus précisément selon le mode de réalisation de la figure 9, des extrémités 211, 221 des éléments 21, 22 sont formées de lames planes parallèles non coplanaires et de préférence dentées comme représenté sur la figure 13. Ces extrémités 211, 221 sont conçues pour être engagées entre le corps 10 et les pistes 11, 12 respectivement. Ainsi les extrémités 211, 221 sont éloignées du doigt central 200.

Selon la représentation donnée sur la figure 10 les extrémités 211, 221 sont formées de lames planes coplanaires et dentées. Elles sont portées par le doigt central 200.

Selon le mode de réalisation donnée sur la figure 11 les extrémités 211, 221 des éléments 21, 22 sont formées de lames planes parallèles non coplanaires recourbées pour s'ancrer mécaniquement dans les pistes 11, 12.

Selon la figure 11, les extrémités 211, 221 sont portées par le doigt 200.

Le fourreau principal 340 est réalisé en matériau thermorétractable.

Pour cela, on peut prévoir, soit de réaliser le noyau 20 comprenant le flasque 330 et les fourreaux 340, 350 par moulage bi-matière (le flasque principal 340 et la partie adjacente du flasque 330 étant en matériau thermorétractable, soit de surmouler un élément thermorétractable formant le fourreau principal 340 sur le flasque 330, soit encore de réaliser le fourreau principal 340 sous forme d'une gaine thermorétractable rapportée sur le système lors de l'utilisation de l'ensemble de connection.

Selon la figure 12, l'ensemble de connection est formé d'un corps thermorétractable 20 surmoulé sur deux éléments électriquement conducteurs 21, 22 soudés sur les fils 51, 52 d'un câble 50. Les soudures sont référencées 53, 54. Le corps 20 comprend un doigt central 200 et deux fourreaux 340, 350 conçus pour être rétractés respectivement sur le corps 10 du détecteur et le câble 50. Les extrémités 211, 221 des éléments 21, 22 représentées sur la figure 12 sont conformes à la figure 11 en variante, il pourrait être conforme aux figures 9 et 10.

Le câble 50 (voir Fig.1) est bien entendu lui-même relié à des moyens de commande adaptés par exemple pour générer une alarme ou inverser le sens de déplacement de l'organe mobile si nécessaire.

## Revendications

1. Système détecteur d'un obstacle intercalé entre un cadre et un organe mobile associé du type comprenant un dispositif détecteur d'obstacle (10) comportant au moins deux pistes électriquement conductrices (11, 12) maintenues séparées au repos par des moyens souples élastiques, caractérisé par le fait qu'il comprend un ensemble de connexion qui comporte :
- un noyau support (20) en matériau électriquement isolant,
- au moins deux éléments électriquement conducteurs (21, 22) séparés portés par le noyau support et destinés à venir respectivement en contact avec les pistes (11, 12) lorsque le noyau est enfiché entre celles-ci,
- des moyens d'enveloppe (30) aptes à venir en prise avec la surface externe du dispositif détecteur d'obstacle (10) pour resserrer celui-ci sur le noyau support (20) et les éléments électriquement conducteurs (21, 22) afin de maintenir une liaison électrique entre les pistes (11, 12) et ces éléments (21, 22) et assurer l'étanchéité du dispositif détecteur.

2. Système détecteur selon la revendication 1, caractérisé par le fait que le noyau support (20) se prolonge vers l'intérieur du dispositif détecteur au-delà des éléments électriquement conducteurs (21, 22), par un insert (23) en matériau électriquement isolant qui évite que l'effet de serrage des moyens d'enveloppe (30) ne porte les pistes (11, 12) en contact.

3. Système détecteur selon l'une des revendications 1 ou 2, caractérisé par le fait que les moyens d'enveloppe (30) comprennent un manchon rétractable (31).

4. Système détecteur selon l'une des revendications 1 à 3, caractérisé par le fait que les moyens d'enveloppe (30) comprennent un manchon thermorétractable (31).

5. Système détecteur selon l'une des revendications 1 à 4, caractérisé par le fait que les moyens d'enveloppe (30) comprennent un boîtier (32) qui comporte un flasque (33) supportant le noyau (20) et un fourreau principal (34) apte à entourer le dispositif détecteur (10).

6. Système détecteur selon la revendication 5, caractérisé par le fait que le fourreau principal (34) est muni sur sa surface externe d'une rainure annulaire (36) apte à recevoir l'extrémité d'une gaine rétractable (31).

7. Système détecteur selon l'une des revendications 5 ou 6, caractérisé par le fait que le flasque (33) est traversé par le noyau (20) et les éléments électriquement conducteurs (21, 22) portés par celui-ci.

8. Système détecteur selon l'une des revendications 5 à 7, caractérisé par le fait que le boîtier (32) comporte en outre un fourreau secondaire (35) sur la face du flasque (33) opposée au fourreau principal (34) et que l'ensemble de connexion comporte un embout (60) apte à être engagé élastiquement dans le fourreau secondaire (35).

9. Système détecteur selon la revendication 8, caractérisé par le fait qu'il comprend deux lamelles souples (62, 63) portées par l'embout (60) et adaptées pour venir respectivement en contact avec les éléments électriquement conducteurs (21, 22).

10. Système détecteur selon l'une des revendications 1 ou 2, caractérisé par le fait que les moyens d'enveloppe (30) comprennent un boîtier formé de deux coquilles (36, 39) articulées et pourvues de moyens d'encliquetage (41, 42).

11. Système détecteur selon l'une des revendications 1 à 10, caractérisé par le fait qu'il comprend des liaisons (51, 52) soudées sur les éléments électriquement conducteurs (21, 22).

12. Système détecteur selon l'une des revendications 1 à 11, caractérisé par le fait que le noyau support (20) est rectiligne.

13. Système détecteur selon l'une des revendications 1 à 12, caractérisé par le fait que certaines au moins des faces du noyau support (20) sont pourvues de dentures (24) pour renforcer l'ancrage du noyau (20) dans le dispositif détecteur (10).

14. Système détecteur selon l'une des revendications 1 à 13, caractérisé par le fait qu'il comprend un ensemble de connexion destiné à raccorder deux sections (a, b) séparées et non alignées d'un dispositif détecteur d'obstacle, comprenant deux éléments électriquement conducteurs non plans (70, 71 ; 73, 74) et destinés à venir respectivement en contact avec les pistes électriquement conductrices (11, 12).

15. Système détecteur selon la revendication 14, caractérisé par le fait que les deux éléments électriquement conducteurs non plans (70, 71 ; 73, 74) sont en forme de "V".

16. Système détecteur selon l'une des revendications 14 ou 15, caractérisé par le fait que les deux éléments électriquement conducteurs non plans (70, 71) sont portés par un noyau support incurvé (72).

17. Système détecteur selon l'une des revendications 14 ou 15, caractérisé par le fait que les deux éléments électriquement conducteurs non plans (73, 74) sont destinés à être engagés respectivement entre l'une des pistes électriquement conductrices (11, 12) et un corps tubulaire (10) du dispositif détecteur, en matériau électriquement isolant.

18. Système détecteur selon la revendication 1, caractérisé par le fait que le noyau support (20) définit un flasque (330) prolongé respectivement de part et d'autre par un fourreau principal (340) et un fourreau secondaire (350).

19. Système détecteur selon la revendication 18, caractérisé par le fait que les éléments électriquement conducteurs (21, 22) traversent le flasque.

20. Système détecteur selon la revendication 19, caractérisé par le fait que les extrémités (211, 221) des éléments électriquement conducteurs (21, 22) accessibles au niveau du fourreau principal (340) sont formées de lames planes parallèles non coplanaires dentées conçues pour être engagées entre le corps du dispositif détecteur et les pistes (11, 12).

21. Système détecteur selon la revendication 19, caractérisé par le fait que les extrémités (211, 221) des éléments électriquement conducteurs (21, 22) accessibles au niveau du fourreau principal (340) sont formées de lames planes coplanaires dentées.

22. Système détecteur selon la revendication 19, caractérisé par le fait que les extrémités (211, 221) des éléments électriquement conducteurs (21, 22) accessibles au niveau du fourreau principal (340) sont formées de lames recourbées.

23. Système détecteur selon l'une des revendications 18 à 22, caractérisé par le fait que le fourreau principal (340) est thermorétractable.

24. Système détecteur selon l'une des revendications 18 à 23, caractérisé par le fait que le flasque (330) est muni d'un doigt central (200) complémentaire de la chambre interne (13) du dispositif détecteur entre les pistes (11,12).

25. Système détecteur selon l'une des revendications 18 à 24, caractérisé par le fait que le noyau (20) est réalisé par moulage bi-matière, le fourreau principal (340) au moins étant réalisé en matériau thermorétractable.

26. Système détecteur selon l'une des revendications 18 à 24, caractérisé par le fait que le noyau (20) est réalisé pour surmoulage d'un matériau thermorétractable sur un corps en matériau électriquement isolant.

27. Système détecteur selon l'une des revendications 18 à 26, caractérisé par le fait que les extrémités (210, 220) des éléments (21, 22) électriquement conducteurs accessibles au niveau du fourreau secondaire (350) sont agencées en connecteur.

28. Système détecteur selon l'une des revendications 18 à 27, caractérisé par le fait que le fourreau secondaire (350) est thermorétractable.

29. Système détecteur selon l'une des revendications 18 à 26 et 28, caractérisé par le fait que les extrémités (210, 220) des éléments (21, 22) sont soudées sur les fils (51, 52) d'un câble.

## Patentansprüche

1. Hindernisdetektor, der zwischen einem Rahmen und einer beweglich verbundenen Einrichtung zwischengeschaltet ist und eine Hindernisdetektorvorrichtung (10) umfaßt, die mindestens zwei elektrische Leiterbahnen (11, 12) enthält, die in Ruhestellung durch elastische, biegsame Mittel getrennt voneinander gehalten werden, dadurch **gekennzeichnet**, daß er einen Verbindungsaufbau umfaßt, der folgendes enthält:
- einen Trägerkern (20) aus elektrisch isolierendem Material,
- zumindest zwei elektrisch leitende Elemente (21, 22), die voneinander getrennt von dem Trägerkern getragen werden und dazu bestimmt sind, jeweils in Kontakt mit den Bahnen (11, 12) zu kommen, wenn der Kern zwischen ihnen eingeschoben ist,
- Umhüllungsmittel (30), die geeignet sind, die äußeren Flächen der Hindernisdetektorvorrichtung (10) zu umgreifen, um diese auf den Trägerkern (20) und die elektrisch leitenden Elemente (21, 22) zu klemmen, um eine elektrische Verbindung zwischen den Bahnen (11, 12) und diesen Elementen (21, 22) zu erhalten und die Dichtigkeit der Detektorvorrichtung sicherzustellen.

2. Detektor nach Anspruch 1, dadurch **gekennzeichnet,** daß sich der Trägerkern (20) über die elektrisch leitenden Elemente (21, 22) hinaus in das Innere der Detektoreinrichtung durch einen Einsatz (23) aus elektrisch isolierendem Material verlängert, der vermeidet, daß der Klemmeffekt der Umhüllungsmittel (30) die Bahnen (11, 12) in Kontakt bringt.

3. Detektor nach einem der Ansprüche 1 oder 2, dadurch **gekennzeichnet**, daß die Umhüllungsmittel (30) eine zusammenziehbare Muffe (31) umfassen.

4. Detektor nach einem der Ansprüche 1 bis 3, dadurch **gekennzeichnet**, daß die Umhüllungsmittel (30) eine thermisch zusammenziehbare Muffe umfassen.

5. Detektor nach einem der Ansprüche 1 bis 4, dadurch **gekennzeichnet**, daß die Umhüllungsmittel (30) ein Gehäuse (32) umfassen, welches einen Flansch (33), der den Kern (20) trägt, und eine Haupthülse (34), die geeignet ist, die Detektorvorrichtung (10) zu umschließen , umfaßt.

6. Detektor nach Anspruch 5, dadurch **gekennzeichnet**, daß die Haupthülse (34) auf ihrer äußeren Oberfläche mit einer Ringnut (36) versehen ist, die geeignet ist, das Ende einer zusammenziehbaren Hülse (31) aufzunehmen.

7. Detektor nach einem der Ansprüche 5 oder 6, dadurch **gekennzeichnet**, daß der Flansch (33) von dem Kern (20) und den von diesem getragenen, elektrisch leitenden Elementen (21,22) durchquert ist.

8. Detektor nach einem der Ansprüche 5 bis 7, dadurch **gekennzeichnet**, daß das Gehäuse (32) außerdem eine zweite Hülse (35) an der Seite des Flanschs (33), die gegenüber der Haupthülse (34) liegt, umfaßt, und daß der Verbindungsaufbau eine Endhülse (60) enthält, die geeignet ist, elastisch mit der zweiten Hülse (35) verbunden zu sein.

9. Detektor nach Anspruch 8, dadurch **gekennzeichnet**, daß er zwei biegsame Lamellen (62,63) umfaßt, die von der Endhülse (60) getragen werden und geeignet sind, jeweils in Kontakt mit den elektrisch leitenden Elementen (21,22) zu kommen.

10. Detektor nach einem der Ansprüche 1 oder 2, dadurch **gekennzeichnet**, daß die Umhüllungsmittel (30) ein Gehäuse umfassen, das aus zwei schwenkbaren und mit Sperren (41,42) versehenen Schalen (36,39) gebildet ist.

11. Detektor nach einem der Ansprüche 1 bis 10, dadurch **gekennzeichnet**, daß er auf die elektrisch leitenden Elemente (21,22) gelötete Verbindungen (51,52) umfaßt.

12. Detektor nach einem der Ansprüche 1 bis 11, dadurch **gekennzeichnet**, daß der Trägerkern (20) gerade ist.

13. Detektor nach einem der Ansprüche 1 bis 12, dadurch **gekennzeichnet**, daß mindestens einige der Seiten des Trägerkerns (20) mit Zahnungen (24) versehen sind, um die Verankerung des Kerns (20) in der Detektorvorrichtung (10) zu verstärken.

14. Detektor nach einem der Ansprüche 1 bis 13, dadurch **gekennzeichnet**, daß er einen Verbindungsaufbau umfaßt, der dazu bestimmt ist, zwei getrennte und nicht in einer geraden Linie angeordnete Bereiche (a, b) einer Hindernisdetektorvorrichtung miteinander zu verbinden, die zwei nicht ebene, elektrisch leitende Elemente (70,71;73,74) umfaßt, die dazu bestimmt sind, jeweils mit den elektrischen Leiterbahnen (11,12) in Kontakt zu kommen.

15. Detektor nach Anspruch 14, dadurch **gekennzeichnet**, daß die beiden, nicht ebenen, elektrisch leitenden Elemente (70,71;73,74) von "V"-Form sind.

16. Detektor nach einem der Ansprüche 14 oder 15, dadurch **gekennzeichnet**, daß die beiden, nicht ebenen, elektrisch leitenden Elemente (70,71) von einem gebogenen Trägerkern (72) gehalten sind.

17. Detektor nach einem der Ansprüche 14 oder 15, dadurch **gekennzeichnet**, daß die beiden, nicht ebenen, elektrisch leitenden Elemente (73,74) dazu bestimmt sind, jeweils zwischen den elektrischen Leiterbahnen (11,12) und einem rohrförmigen Körper (10) der Detektorvorrichtung aus elektrisch isolierendem Material eingefügt zu sein.

18. Detektor nach Anspruch 1, dadurch **gekennzeichnet**, daß der Trägerkern (20) einen Flansch (330) bestimmt, der beidseitig, durch eine Haupthülse (340) bzw. eine zweite Hülse (350), verlängert ist.

19. Detektor nach Anspruch 18, dadurch **gekennzeichnet**, daß die elektrisch leitenden Elemente (21,22) den Flansch durchqueren.

20. Detektor nach Anspruch 19, dadurch **gekennzeichnet**, daß die Enden (211,221) der elektrisch leitenden Elemente (21,22), die auf der Höhe der Haupthülse (340) zugänglich sind, aus planparallelen, nicht koplanaren, gezahnten Platten gebildet sind, die zum Einbinden zwischen den Körper der Detektorvorrichtung und den Bahnen (11,12) ausgelegt sind.

21. Detektor nach Anspruch 19, dadurch **gekennzeichnet**, daß die Enden (211,221) der elektrisch leitenden Elemente (21,22), die auf der Höhe der Haupthülse (340) zugänglich sind, aus ebenen, koplanaren, gezahnten Platten gebildet sind.

22. Detektor nach Anspruch 19, dadurch **gekennzeichnet**, daß die Enden (211,221) der elektrisch leitenden Elemente (21,22), die auf der Höhe der Haupthülse (340) zugänglich sind, aus gebogenen Platten gebildet sind.

23. Detektor nach einem der Ansprüche 18 bis 22, dadurch **gekennzeichnet**, daß die Haupthülse (340) thermisch zusammenziehbar ist.

24. Detektor nach einem der Ansprüche 18 bis 23, dadurch **gekennzeichnet**, daß der Flansch (330) mit einem mittigen, die innere Kammer (13) der Detektorvorrichtung zwischen den Bahnen (11,12) ergänzenden Finger (200) versehen ist.

25. Detektor nach einem der Ansprüche 18 bis 24, dadurch **gekennzeichnet**, daß der Kern (20) durch Sandwichpressen hergestellt ist, und daß zumindest die Haupthülse (340) aus thermisch zusammenziehbarem Material hergestellt ist.

26. Detektor nach einem der Ansprüche 18 bis 24, dadurch **gekennzeichnet**, daß der Kern (20) zum Aufgiessen eines thermisch zusammenziehbarem Materials auf einen Körper aus elektrisch isolierendem Material hergestellt ist.

27. Detektor nach einem der Ansprüche 18 bis 26, dadurch **gekennzeichnet**, daß die Enden (210,220) der elektrisch leitenden Elemente (21,22), die auf der Höhe der zweiten Hülse (350) zugänglich sind, als Stecker ausgeführt sind.

28. Detektor nach einem der Ansprüche 18 bis 27, dadurch **gekennzeichnet**, daß die zweite Hülse (350) aus thermisch zusammenziehbarem Material ist.

29. Detektor nach einem der Ansprüche 18 bis 26 und 28, dadurch **gekennzeichnet**, daß die Enden (210,220) der Elemente (21,22) auf die Drähte (51,52) eines Kabels aufgelötet sind.

## Claims

1. Obstacle detection system interposed between a frame and an associated moving member of the type comprising an obstacle detection device (10) having at least two electrically conductive tracks (11, 12) kept separated at rest by flexible elastic means, characterised by the fact that it comprises a connection assembly which includes:
- a supporting core (20) made from electrically insulating material,
- at least two separate electrically conductive parts (21, 22) carried by the supporting core and intended to come into contact respectively with the tracks (11, 12) when the core is plugged in between them,
- enclosing means (30) suitable for engaging with the external surface of the obstacle detection device (10) so as to tighten the latter on the supporting core (20) and the electrically conductive parts (21, 22) in order to maintain an electrical connection between the tracks (11, 12) and these parts (21, 22) and to ensure that the detection device is sealed.

2. Detection system according to Claim 1, characterised by the fact that the supporting core (20) is extended, towards the inside of the detection device beyond the electrically conductive parts (21, 22), by an insert (23) made from electrically insulating material, which prevents the tightening effect of the enclosing means (30) from bringing the tracks (11, 12) into contact.

3. Detection system according to one of Claims 1 or 2, characterised by the fact that the enclosing means (30) comprise a retractable sleeve (31).

4. Detection system according to one of Claims 1 to 3, characterised by the fact that the enclosing means (30) comprise a thermoretractable sleeve (31).

5. Detection system according to one of Claims 1 to 4, characterised by the fact that the enclosing means (30) comprise a casing (32) which includes an end plate (33) supporting the core (20) and a main sheath (34) suitable for surrounding the detection device (10).

6. Detection system according to Claim 5, characterised by the fact that the main sheath (34) has, on its external surface, an annular groove (36) suitable for receiving the end of a retractable tube (31).

7. Detection system according to one of Claims 5 or 6, characterised by the fact that the core (20) and the electrically conductive parts (21, 22) carried by it pass through the end plate (33).

8. Detection system according to one of Claims 5 to 7, characterised by the fact that the casing (32) also includes a secondary sheath (35) on the face of the end plate (33) opposite to the main sheath (34) and in that the connection assembly includes a connection piece (60) suitable for being engaged elastically in the secondary sheath (35).

9. Detection system according to Claim 8, characterised by the fact that it comprises two flexible blades (62, 63) carried by the connecting piece (60) and suitable for coming into contact respectively with the electrically conductive parts (21, 22).

10. Detection system according to one of Claims 1 or 2, characterised by the fact that the enclosing means (30) comprise a casing formed by two articulated shells (36, 39) provided with latching means (41, 42).

11. Detection system according to one of Claims 1 to 10, characterised by the fact that it comprises links (51, 52) welded to the electrically conductive parts (21, 22).

12. Detection system according to one of Claims 1 to 11, characterised by the fact that the supporting core (20) is rectilinear.

13. Detection system according to one of Claims 1 to 12, characterised by the fact that at least some of the faces of the supporting core (20) have serrations (24) for reinforcing the anchoring of the core (20) in the detection device (10).

14. Detection system according to one of Claims 1 to 13, characterised by the fact that it comprises a connection assembly intended to connect two separate non-aligned sections (a, b) of an obstacle detection device, comprising two non-plane electrically conductive parts (70, 71; 73, 74) intended to come into contact respectively with the electrically conductive tracks (11, 12).

15. Detection system according to Claim 14, characterised by the fact that the two non-plane electrically conductive parts (70, 71; 73, 74) are V-shaped.

16. Detection system according to one of Claims 14 or 15, characterised by the fact that the two non-plane electrically conductive parts (70, 71) are carried by a curved supporting core (72).

17. Detection system according to one of Claims 14 or 15, characterised by the fact that the two non-plane electrically conductive parts (73, 74) are intended to be engaged respectively between one of the electrically conductive tracks (11, 12) and a tubular body (10) of the detection device, made from electrically insulating material.

18. Detection system according to Claim 1, characterised by the fact that the supporting core (20) defines an end plate (330) extended respectively, on each side, by a main sheath (340) and secondary sheath (350).

19. Detection system according to Claim 18, characterised by the fact that the electrically conductive parts (21, 22) pass through the end plate.

20. Detection system according to Claim 19, characterised by the fact that the ends (211, 221) of the electrically conductive parts (21, 22) accessible at the main sheath (340) are formed by plane parallel non-coplanar toothed blades designed to be engaged between the body of the detection device and the tracks (11, 12).

21. Detection system according to Claim 19, characterised by the fact that the ends (211, 221) of the electrically conductive parts (21, 22) accessible at the main sheath (340) are formed by plane coplanar toothed blades.

22. Detection system according to Claim 19, characterised by the fact that the ends (211, 221) of the electrically conductive elements (21, 22) accessible at the main sheath (340) are formed by curved blades.

23. Detection system according to one of Claims 18 to 22, characterised by the fact that the main sheath (340) is thermoretractable.

24. Detection system according to one of Claims 18 to 23, characterised by the fact that the end plate (330) has a central pin (200) complementary to the inner chamber (13) of the detection device between the tracks (11, 12).

25. Detection system according to one of Claims 18 to 24, characterised by the fact that the core (20) is produced by moulding in two materials, the main sheath (340) at least being produced from thermoretractable material.

26. Detection system according to one of Claims 18 to 24, characterised by the fact that the core (20) is produced by moulding a thermoretractable material onto a body made from electrically insulating material.

27. Detection system according to one of Claims 18 to 26, characterised by the fact that the ends (210, 220) of the electrically conductive parts (21, 22) accessible at the secondary sheath (350) are arranged as a connector.

28. Detection system according to one of Claims 18 to 27, characterised by the fact that the secondary sheath (350) is thermoretractable.

29. Detection system according to one of Claims 18 to 26 and 28, characterised by the fact that the ends (210, 220) of the parts (21, 22) are soldered to the conductors (51, 52) of a cable.
